# EUROPEAN PATENT APPLICATION

(11) **EP 4 711 199 A1**
(43) Date of publication of application: **18.03.2026**
(21) Application number: 25189639.5
(22) Date of filing: 15.07.2025
(51) Int. Cl.: B60N 2/28

(54) **SAFETY SEAT**

(30) Priority: 15.08.2024 CN 202421982633 U
(71) Applicant: Max-Inf (Ningbo) Baby Product Co., Ltd, Ningbo, Zhejiang 315000 (CN)
(72) Inventor: JI, Xuewei, Ningbo, 315000 (CN); LIU, Jianchun, Ningbo, 315000 (CN)
(74) Representative: Santarelli

(57) **Abstract**

The present application provides a safety seat, which relates to the technical field of automobile seats. The safety seat includes a base, a bracket and an anti-tilt assembly for abutting against the backrest of a car seat, the bracket is arranged on the base, the anti-tilt assembly is arranged on the bracket, at least one positioning part is arranged on the bracket, and a plurality of positioning matching parts are arranged on the anti-tilt assembly, the positioning part is selectively engaged with any positioning matching part to limit the rotation of the anti-tilt assembly, when the positioning part is disengaged from the positioning matching part, the anti-tilt assembly can rotate relative to the bracket, being capable of abutting against car seats with varying backrest angles to reduce the rebound force when the speed of the automobile changes.

## Description

### Technical Field

The present application relates to the technical field of automobile seats, and in particular to a safety seat.

### Background Art

A safety seat is a seat that is attached to a car seat as a car accessory that has restraining and protective functions. Commonly referred to as child safety seats, infant safety seats, or car protection seats, all these terms generally refer to this type of safety seat.

Currently, the backrest angle of car seats varies from vehicle to vehicle, which causes the safety seat to be unable to rest firmly against the backrest of the car seat when installed. In such case, a sudden change in the vehicle's speed may cause the safety seat to be subjected to a large rebound force, potentially leading to excessive shaking of the seat and even causing injury to the occupant.

### Summary of the Invention

An objective of the present application includes, for example, providing a safety seat that can be abutted against car seats with varying backrest angles, in order to reduce the rebound force when the speed of the car changes.

Embodiments of the present application can be implemented as follows:
An embodiment of the present application provides a safety seat, which includes a base, a bracket and an anti-tilt assembly for abutting against a backrest of a car seat. The bracket is arranged on the base, and the anti-tilt assembly is arranged on the bracket. At least one positioning part is arranged on the bracket, a plurality of positioning matching parts are arranged on the anti-tilt assembly, and the positioning part is selectively engaged with any one of the positioning matching parts so as to limit rotation of the anti-tilt assembly, and when the positioning part is disengaged from the positioning matching parts, the anti-tilt assembly is able to rotate relative to the bracket.

Optionally, the anti-tilt assembly includes at least one anti-tilt plate and an elastic member, the plurality of positioning matching parts are arranged on the anti-tilt plate, the anti-tilt plate is arranged on the bracket, the elastic member is connected between the anti-tilt plate and the bracket, and each positioning part can be engaged with any one of the positioning matching parts under an action of the elastic member.

Optionally, the plurality of positioning matching parts are a plurality of engaging grooves that are provided on the anti-tilt plate, and the positioning part is an engaging tooth, which is selectively engaged with any one of the engaging grooves.

Optionally, a first through hole is opened on the anti-tilt plate, a plurality of protruded parts are arranged at intervals in the first through hole, the engaging grooves are formed between an inner wall of the first through hole and the protruded parts close to the inner wall and between adjacent protruded parts.

Optionally, each of the protruded parts includes a transition surface and a stopping surface connected to each other, and the transition surface is arranged to be inclined relative to the stopping surface.

Optionally, the anti-tilt assembly further includes a supporting transverse shaft connected to the anti-tilt plate, the elastic member is a tension spring, one end of the tension spring is connected to the supporting transverse shaft, and the other end thereof is connected to the bracket.

Optionally, the anti-tilt assembly further includes first nuts, the number of the anti-tilt plates is two, both ends of the supporting transverse shaft respectively pass through the two anti-tilt plates, and either end of the supporting transverse shaft is relatively fixed to a corresponding anti-tilt plate through a respective first nut.

Optionally, a slotted hole is formed on the anti-tilt plate, and the safety seat further includes a rod piece, which passes through the bracket and extends into the slotted hole.

Optionally, the anti-tilt assembly further includes a second nut, the rod piece is a threaded rod, a second through hole is opened on the bracket, the threaded rod sequentially passes through the slotted hole and the second through hole, and the second nut cooperates with an end of the threaded rod extending out of the second through hole.

Optionally, the anti-tilt plate includes a connecting part and an extending part that are connected to each other, the plurality of positioning matching parts are arranged on the connecting part, the connecting part is rotatably arranged on the bracket, and the elastic member is connected between the connecting part and the bracket; the anti-tilt assembly further includes a shell sleeved on the extending part.

Optionally, the shell includes a front cover and a rear cover, the front cover and the rear cover are connected to form an inner cavity therebetween, and the extending part is located within the inner cavity.

Optionally, the base includes a base upper cover and a base lower cover connected to each other, and the bracket is arranged on the base lower cover.

The advantageous effects of the safety seat provided by the embodiments of the present application are as follows: in order to be abutted against a car seat with varying backrest angles to reduce the rebound force during change of the car speed, a safety seat is designed, which includes a base, a bracket and an anti-tilt assembly for abutting against the car seat backrest, the bracket is arranged on the base, the anti-tilt assembly is rotatably arranged on the bracket, at least one positioning part is arranged on the bracket, and a plurality of positioning matching parts are arranged on the anti-tilt assembly, the positioning part is selectively engaged with any one of the positioning matching parts to limit the rotation of the anti-tilt assembly, and when the positioning part is disengaged from the positioning matching part, the anti-tilt assembly is able to rotate relative to the bracket. When the safety seat is in use, the base is fixed to the car seat, and then the positioning part is disengaged from the positioning matching part. Then, the anti-tilt assembly is rotated relative to the bracket according to the backrest angle of the car seat until the anti-tilt assembly is abutted against the backrest of the car seat. The positioning part is then engaged with another positioning matching part to limit the rotation of the anti-tilt assembly, so that the anti-tilt assembly can reliably abut against the backrest of the car seat. When the speed of the car changes, the safety seat is subjected to less rebound force and is not prone to significant shaking, thereby reducing the risk of injury to occupants.

### Brief Description of the Drawings

In order to more clearly illustrate the technical solutions of the embodiments of the present application, the drawings related to the embodiments will be briefly introduced below. It should be understood that the following drawings only show certain embodiments of the present application and therefore should not be regarded as limiting the scope. For a person of ordinary kills in the art, other related drawings can be obtained based on these drawings without paying creative effort.
FIG. 1 is a schematic diagram of the overall structure of a safety seat;
FIG. 2 is a schematic diagram of a first partial structure of the safety seat;
FIG. 3 is a schematic diagram of the structure of a bracket;
FIG. 4 is a schematic diagram illustrating the connection relationship between anti-tilt plates and a supporting transverse shaft;
FIG. 5 is a schematic diagram of a second partial structure of the safety seat;
FIG. 6 is an enlarged view of area A in FIG. 5;
FIG. 7 is a cross-sectional view of a partial structure of the safety seat; and
FIGS. 8 to 11 are cross-sectional views of the safety seat during operation.

Reference signs are as follows: 10 safety seat; 100 base; 110 base upper cover; 120 base lower cover; 200 bracket; 210 engaging tooth; 220 second through hole; 300 anti-tilt assembly; 310 anti-tilt plate; 311 engaging groove; 312 first through hole; 313 slotted hole; 314 connecting part; 315 extending part; 316 protruded part; 3161 transition surface; 3162 stopping surface; 320 supporting transverse shaft; 330 tension spring; 340 first nut; 350 second nut; 400 rod piece; 500 shell; 510 front cover; and 520 rear cover.

### Detailed Description of Embodiments

In order to make the purpose, technical solution and advantages of the embodiments of the present application clearer, the technical solution in the embodiments of the present application will be clearly and completely described below in conjunction with the accompanying drawings. Apparently, the described embodiments are part of the embodiments of the present application, rather than all of them. The components of the embodiments of the present application as described and illustrated in the drawings can be arranged and designed in various different configurations.

Therefore, the following detailed description of the embodiments of the present application illustrated in the accompanying drawings is not intended to limit the scope of the present application for which protection is sought, but merely represents selected embodiments of the present application. Based on the embodiments in the present application, all other embodiments obtained by ordinary technicians in the field without creative work are within the scope of protection of the present application.

It should be noted that similar reference numerals and letters denote similar elements in the following drawings, and therefore, once an element is defined in one drawing, it does not need to be further defined or explained in the subsequent figures.

In the description of the present application, it should be noted that terms such as "upper", "lower", "inside", "outside", and the like are used to indicate orientation or position relationships, they are based on the orientation or position relationships shown in the accompanying drawings, or on the conventional placement of the product during use. These terms are used merely for the purpose of convenience of describing the present application and simplifying the description, and are not intended to indicate or imply that the referenced device or element must have a particular orientation or be constructed and operated in a particular orientation. Therefore, they should not be construed as limiting the scope of the present application.

In addition, terms "first", "second", and the like, if used, are merely for the purpose of distinguishing one element from another and should not be construed as indicating or implying relative importance.

It should be noted that, where there is no conflict, the features in the embodiments of the present application may be combined with one another.

The inventors of the present application have found that the backrest angles of the car seats on each car are different, and even within a single car, multiple car seats may have different backrest angles. As a result, the safety seat may not be able to abut against the backrest of some car seats when installed. In such cases, a sudden change in the speed of the car may subject the safety seat to a significant rebound force, potentially causing excessive shaking of the seat and even leading to occupant injury. The embodiments of the present application provide a safety seat, at least for the purpose of addressing this technical problem.

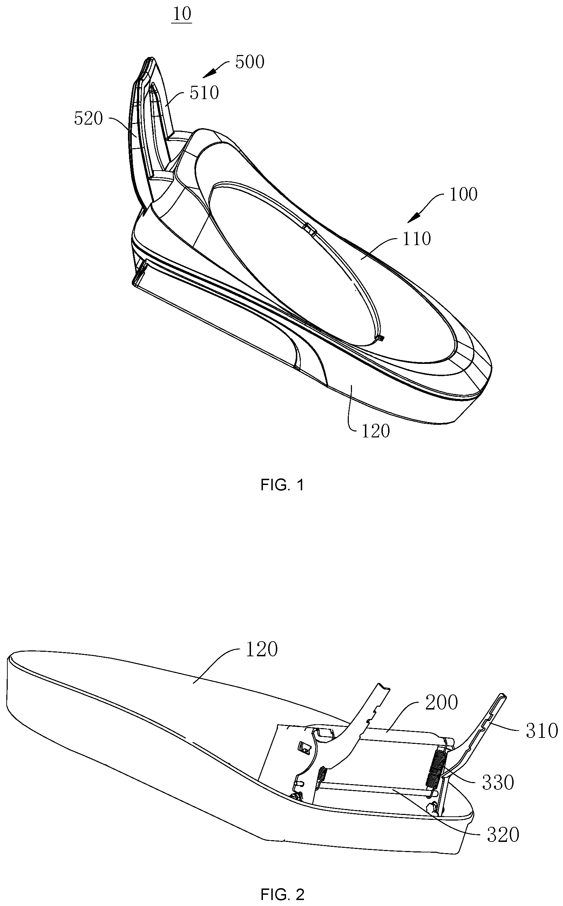

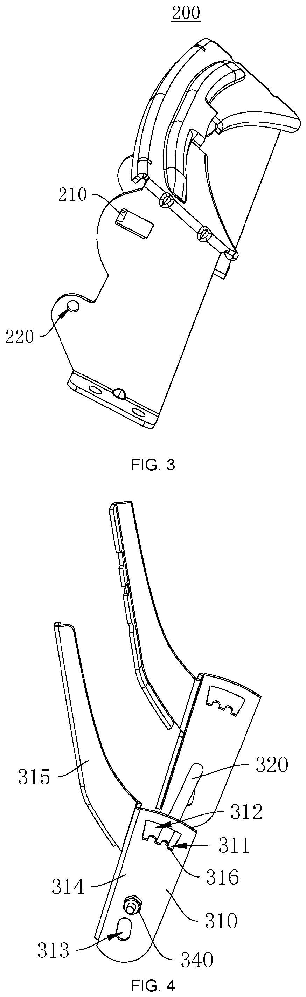

Referring to FIGS. 1 to 4, an embodiment of the present application provides a safety seat 10 including a base 100, a bracket 200 and an anti-tilt assembly 300 for abutting against a car seat backrest. The bracket 200 is arranged on the base 100, and the anti-tilt assembly 300 is arranged on the bracket 200. At least one positioning part is arranged on the bracket 200, and a plurality of positioning matching parts are arranged on the anti-tilt assembly 300. The positioning part is selectively engaged with any one of the positioning matching parts to limit the rotation of the anti-tilt assembly 300. When the positioning part is disengaged from the positioning matching part, the anti-tilt assembly 300 is able to rotate relative to the bracket 200.

The base 100 includes a base upper cover 110 and a base lower cover 120 connected to each other, and the bracket 200 is arranged on the base lower cover 120. The base lower cover 120 is configured to be fixed to the car seat. The base upper cover 110 and the base lower cover 120 may be connected by means of insertion, snap-fit, bolt connection, or the like, which is not limited herein.

The positioning part is capable of being engaged with or disengaged from any one of the positioning matching parts. When the positioning part is engaged with the positioning matching part, the anti-tilt assembly 300 is relatively fixed to the bracket 200. When the positioning part is disengaged from the positioning matching part, the anti-tilt assembly 300 is able to rotate relative to the bracket 200.

During the use of the safety seat 10, the base lower cover 120 is fixed to the car seat, and then the positioning part is disengaged from the positioning matching part. At this point, the anti-tilt assembly 300 is rotated relative to the bracket 200 according to the backrest angle of the car seat until the anti-tilt assembly 300 abuts against the backrest of the car seat, and then the positioning part is engaged with the positioning matching part at a corresponding position to limit the rotation of the anti-tilt assembly 300, so that the anti-tilt assembly 300 can relatively stably abut against the backrest of the car seat. When the speed of the car changes, the safety seat 10 is subjected to a smaller rebound force and is not prone to significant shaking, thereby reducing the risk of injury to the occupant.

In other embodiments, the plurality of positioning matching parts are arranged on the bracket 200, and the positioning part is arranged on the anti-tilt assembly 300. The rotation of the anti-tilt assembly 300 is limited when the positioning part is engaged with any one of the positioning matching parts, and the anti-tilt assembly 300 is able to rotate relative to the bracket 200 when the positioning part is disengaged from the positioning matching part.

In this embodiment, the anti-tilt assembly 300 includes at least one anti-tilt plate 310 and an elastic member, and the plurality of positioning matching parts are all arranged on the anti-tilt plate 310. The anti-tilt plate 310 is arranged on the bracket 200. The elastic member is connected between the anti-tilt plate 310 and the bracket 200. The positioning part can be engaged with any positioning matching part under the action of the elastic member.

When the angle of the anti-tilt plate 310 needs to be adjusted, the positioning part is first disengaged from one of the positioning matching parts, then the anti-tilt plate 310 is rotated relative to the bracket 200 so that it abuts against the backrest of the car seat. Upon release, the anti-tilt plate 310 can move under the action of the elastic member until the positioning part is engaged with another positioning matching part, thereby adjusting the angle of the anti-tilt plate 310.

In this embodiment, the positioning matching parts are engaging grooves 311, and a plurality of engaging grooves 311 are provided on the anti-tilt plate 310. The positioning part is an engaging tooth 210, which is selectively engageable with any one of the engaging grooves 311.

The anti-tilt plate 310 is provided with a first through hole 312, which is fan-shaped. The plurality of engaging grooves 311 are all located on an arc-shaped inner wall of the first through hole 312 close to the base 100. The plurality of engaging grooves 311 are arranged at intervals along an extension direction of the arc-shaped inner wall.

When the angle of the anti-tilt plate 310 needs to be adjusted, the engaging tooth 210 is first disengaged from one of the engaging grooves 311, so that the engaging tooth 210 can move in the first through hole 312, and then the anti-tilt plate 310 is rotated relative to the bracket 200 until it abuts against the backrest of the car seat. At this point, the anti-tilt plate 310 is released, so that it can move under the action of the elastic member until the engaging tooth 210 is engaged with another engaging groove 311, thereby adjusting the angle of the anti-tilt plate 310. In this embodiment, the anti-tilt assembly 300 further includes a supporting transverse shaft 320, which is connected to the anti-tilt plate 310, and the elastic member is a tension spring 330, one end of which is connected to the supporting transverse shaft 320, and the other end thereof is connected to the bracket 200.

The supporting transverse shaft 320 extends in a horizontal direction. During the disengagement of the engaging tooth 210 from one of the engaging grooves 311, the tension spring 330 is stretched. When the anti-tilt plate 310 is rotated to a desired position and released, the anti-tilt plate 310 moves under the restoring force of the tension spring 330 until the engaging tooth 210 is engaged with another engaging groove 311, thereby adjusting the angle of the anti-tilt plate 310.

In other embodiments, the tension spring 330 may be replaced by other elastic members such as springs, as long as they can drive the anti-tilt plate 310 to return to its original position.

In this embodiment, the anti-tilt assembly 300 further includes first nuts 340, and the number of anti-tilt plates 310 is two. Two ends of the supporting transverse shaft 320 pass through the two anti-tilt plates 310 respectively, and either end of the supporting transverse shaft 320 is relatively fixed to a corresponding anti-tilt plate 310 through a respective first nut 340.

Two anti-tilt plates 310 are simultaneously connected to the two ends of the supporting transverse shaft 320 through the cooperation between the supporting transverse shaft 320 and the first nuts 340, and the two anti-tilt plates 310 are rotatably connected to the bracket 200. Optionally, two tension springs 330 are provided, and the two tension springs 330 are symmetrically arranged along a length direction of the supporting transverse shaft 320. The two tension springs 330 simultaneously apply force to the supporting transverse shaft 320, making the anti-tilt plates 310 less prone to displacement and ensuring a more stable movement process.

In this embodiment, a slotted hole 313 is formed on each of the anti-tilt plates 310, and the safety seat 10 further includes rod pieces 400, which pass through the bracket 200 and extend into the slotted holes 313.

By arranging the slotted holes 313 on the anti-tilt plates 310 with the rod pieces 400 passing through the bracket 200 and extending into the slotted holes 313, each rod piece 400 can move in the slotted hole 313 during the disengagement process of the engaging tooth 210 from one of the engaging grooves 311, and after the engaging tooth 210 is disengaged from one of the engaging grooves 311, the anti-tilt plates 310 can rotate around the rod pieces 400.

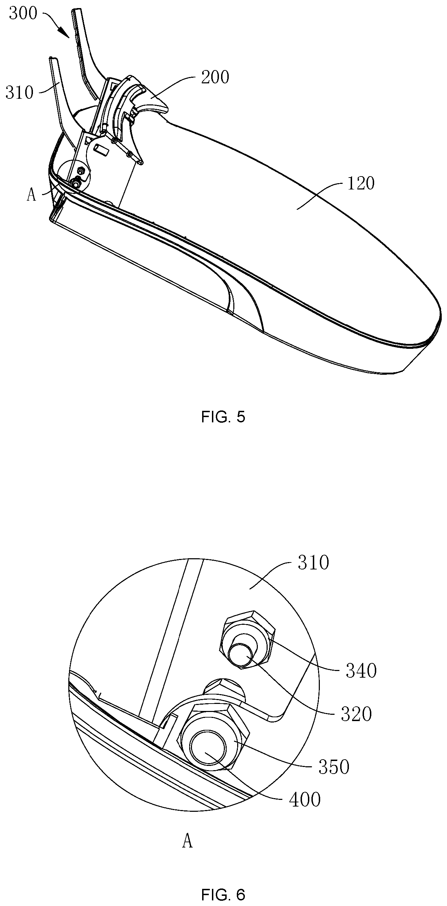

Referring to FIGS. 5 and 6, in this embodiment, the anti-tilt assembly 300 also includes second nuts 350. The rod pieces 400 are threaded rods, and second through holes 220 are opened on the bracket 200, so that each threaded rod sequentially passes through a corresponding slotted hole 313 and second through hole 220, and the second nuts 350 cooperates with ends of the threaded rods extending out of the second through holes 220.

Two second nuts 350 and two threaded rods are provided, and two second through holes 220 are provided on the bracket 200. One of the threaded rods passes through the slotted hole 313 on one of the anti-tilt plates 310 and one of the second through holes 220 on the bracket 200. The two second nuts 350 are respectively threadedly engaged with ends of the two threaded rods extending out of the respective second through holes 220. The threaded rods can be stepped screws.

When mounting the anti-tilt plates 310, the two anti-tilt plates 310 are connected via the supporting transverse shaft 320, and then the two threaded rods pass through respective slotted holes 313 and second through holes 220, and finally the two threaded rods are fixed to the bracket 200 via the two second nuts.

In this embodiment, each of the anti-tilt plates 310 includes a connecting part 314 and an extending part 315 that are connected to each other, and the plurality of positioning matching parts are arranged on the connecting part 314. The connecting part 314 is rotatably arranged on the bracket 200, and the elastic member is connected between the connecting part 314 and the bracket 200; the anti-tilt assembly 300 further includes a shell 500 sleeved on the extending part 315.

The plurality of engaging grooves 311 are arranged on each connecting part 314, and the slotted hole 313 is provided on the connecting part 314. Each threaded rod sequentially passes through the slotted hole 313 and the second through hole and is fixed by the second nut 350. When the engaging tooth 210 is disengaged from the engaging groove 311, the connecting part 314 and the extending part 315 as a whole can rotate around the threaded rod relative to the bracket 200. The two ends of the supporting transverse shaft 320 respectively pass through the connecting parts 314 of the two anti-tilt plates 310, and either end of the supporting transverse shaft 320 is relatively fixed to the corresponding connecting part 314 by a respective first nut 340, and the two ends of the tension spring 330 are respectively connected to the supporting transverse shaft 320 and the bracket 200.

The shell 500 is simultaneously sleeved on the extending parts 315 of the two anti-tilt plates 310, and the shell 500 is configured to abut against the backrest of the car seat, allowing a more stable and reliable installation.

In this embodiment, a plurality of protruded parts 316 are arranged at intervals in the first through hole 312, and engaging grooves 311 are formed between the protruded parts 316 close to the inner wall of the first through hole 312 and the inner wall of the first through hole 312 and between adjacent protruded parts 316.

The plurality of protruded parts 316 are arranged at intervals along the extension direction of the arc-shaped inner wall of the first through hole 312 close to the base 100. The first through hole 312 has two side walls connecting the upper and lower arc-shaped inner walls. Engaging grooves 311 are formed between either one of the side walls and the protruded parts 316 close to the side walls and between adjacent protruded parts 316.

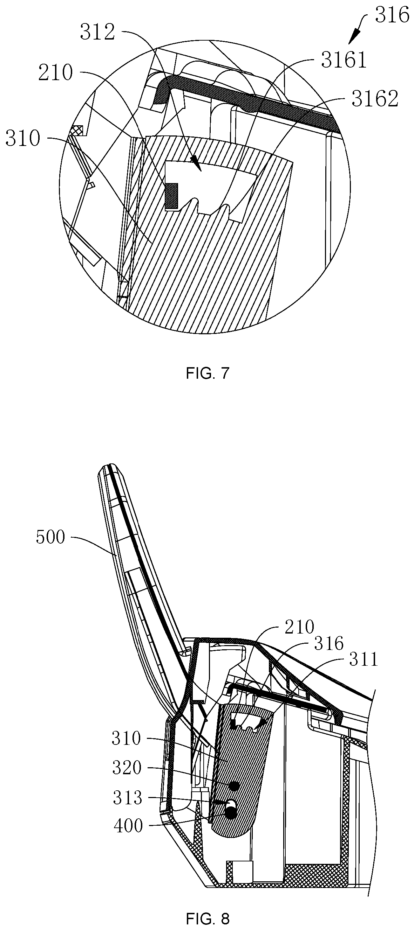

Referring to FIG. 7, in an optional embodiment, each protruded part 316 includes a transition surface 3161 and a stopping surface 3162 connected to each other, and the transition surface 3161 is inclined relative to the stopping surface 3162. The transition surface 3161 faces one of the side walls of the first through hole 312, and the stopping surface 3162 faces the other one of the side walls thereof.

When the shell 500 is pushed toward the rear side of the base 100, the engaging tooth 210 rides over one or more transition surfaces 3161. When the engaging tooth 210 rides over one of the transition surfaces 3161, the engaging tooth 210 forces the anti-tilt plates 310 to move obliquely downward until the engaging tooth 210 is disengaged from the one of the engaging grooves 311. When the engaging tooth 210 rides over one transition surface 3161 and abuts against the stopping surface 3162 connected to the transition surface 3161, the engaging tooth 210 is engaged with the next engaging groove 311. At this point, if the shell 500 is pushed toward the front side of the base 100, the engaging tooth 210 will be resisted by the stopping surface 3162, unable to be disengaged from the engaging groove 311, thereby avoiding accidental disengagement. To restore the anti-tilt plates 310 to their original position, the shell 500 needs to be pressed down to separate the engaging tooth 210 from the engaging groove 311, and then the shell 500 is pushed toward the front side of the base 100.

Continuing to refer to FIG. 1, in this embodiment, the shell 500 includes a front cover 510 and a rear cover 520. The front cover 510 and the rear cover 520 are connected to form an inner cavity therebetween, and the extending parts 315 are located in the inner cavity.

The front cover 510 and the rear cover 520 are spliced together to form the shell 500, and the rear cover 520 is configured to abut against the backrest of the car seat. The extending parts 315 are positioned in the inner cavity formed between the front cover 510 and the rear cover 520 to protect the occupants. The front cover 510 and the rear cover 520 may be connected by means of insertion, snap-fit, bolt connection, or the like, which is not limited herein.

In addition, the bracket 200 and the anti-tilt plates 310 may be made of metal such as iron, aluminum, or non-metallic materials.

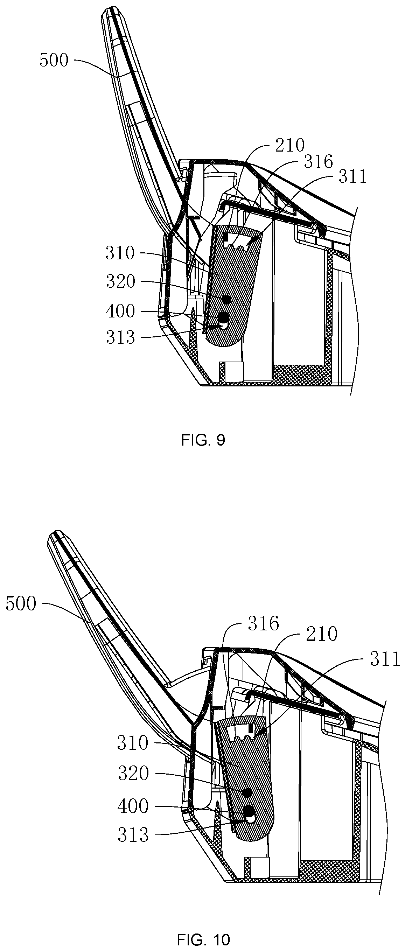

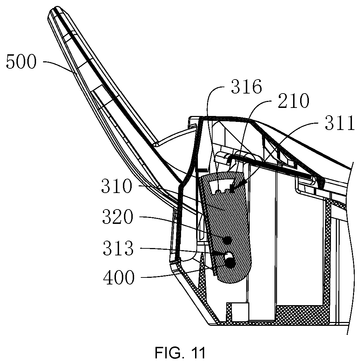

As an exemplary embodiment, referring to FIGS. 8 to 11, when three engaging grooves 311 are provided, the engaging tooth 210 is first in a state of being engaged with the leftmost engaging groove 311, and then the shell 500 is pressed downward to force the engaging tooth 210 to disengage from the leftmost engaging groove 311. At this point, the shell 500 is pushed backward, such that the shell 500 can rotate around the rod piece 400 until the engaging tooth 210 is located above the rightmost engaging groove 311. Then, the shell 500 is released, and the shell 500 and the anti-tilt plates 310 move under the restoring force of the tension spring 330 until the engaging tooth 210 is engaged with the rightmost engaging groove 311, thereby adjusting the angle of the shell 500. When the shell 500 is pushed backward, the engaging tooth 210 may also be located above the middle engaging groove 311, as the shell 500 is released, the engaging tooth 210 is engaged with the middle engaging groove 311.

The operating mechanism of the safety seat 10 provided in the embodiment of the present application at least includes: when the safety seat 10 is in use, the base 100 is fixed to the car seat, and then the shell 500 is pressed to disengage the engaging tooth 210 from one of the engaging grooves 311, that is, the engaging tooth 210 is separated from the one of the engaging grooves 311, and then the shell 500 is rotated around the rod piece 400 relative to the bracket 200 until the shell 500 abuts against the backrest of the car seat. At this point, the shell 500 is released, and the shell 500 and the anti-tilt plates 310 move under the restoring force of the tension spring 330 until the engaging tooth 210 is engaged with another engaging groove 311, thereby adjusting the angle of the shell 500, allowing the shell 500 to relatively stably abut against the backrest of the car seat.

In summary, embodiments of the present application provide a safety seat 10. During use of the safety seat 10, the anti-tilt assembly 300 is rotated relative to the bracket 200 according to the backrest angle of the car seat until the anti-tilt assembly 300 abuts against the backrest of the car seat, and then the positioning part is engaged with the positioning matching part at a corresponding position to limit the rotation of the anti-tilt assembly 300, so that the anti-tilt assembly 300 can relatively stably abut against the backrest of the car seat. When the speed of the car changes, the rebound force on the safety seat 10 is relatively small, and it is not prone to significant shaking, thereby reducing the risk of injury to the occupant.

The above are merely specific implementations of the present application, but the scope of protection of the present application is not limited thereto. Any changes or substitutions that can be readily conceived by a person skilled in the art within the technical scope disclosed in the present application shall fall within the scope of protection of the present application. Therefore, the scope of protection of the present application shall be defined by the appended claims.

## Claims

1. A safety seat, **characterized in that** it comprises a base (100), a bracket (200) and an anti-tilt assembly (300) for abutting against a backrest of a car seat, wherein the bracket (200) is arranged on the base (100), the anti-tilt assembly (300) is arranged on the bracket (200), at least one positioning part is arranged on the bracket (200), and a plurality of positioning matching parts are arranged on the anti-tilt assembly (300), the positioning part is selectively engaged with any one of the positioning matching parts to limit rotation of the anti-tilt assembly (300), and when the positioning part is disengaged from the positioning matching parts, the anti-tilt assembly (300) is able to rotate relative to the bracket (200).

2. The safety seat according to claim 1, **characterized in that** the anti-tilt assembly (300) comprises at least one anti-tilt plate (310) and an elastic member, the plurality of positioning matching parts are arranged on the anti-tilt plate (310), the anti-tilt plate (310) is arranged on the bracket (200), the elastic member is connected between the anti-tilt plate (310) and the bracket (200), and the positioning part is capable of being engaged with any one of the positioning matching parts under an action of the elastic member.

3. The safety seat according to claim 2, **characterized in that** the plurality of positioning matching parts are a plurality of engaging grooves (311) that are provided on the anti-tilt plate (310), the positioning part is an engaging tooth (210), which is selectively engaged with any one of the engaging grooves (311).

4. The safety seat according to claim 3, **characterized in that** a first through hole (312) is opened on the anti-tilt plate (310), a plurality of protruded parts (316) are arranged at intervals in the first through hole (312), the engaging grooves (311) are formed between an inner wall of the first through hole (312) and the protruded parts (316) close to the inner wall and between adjacent protruded parts (316).

5. The safety seat according to claim 4, **characterized in that** each of the protruded parts (316) comprises a transition surface (3161) and a stopping surface (3162) connected to each other, and the transition surface (3161) is arranged to be inclined relative to the stopping surface (3162).

6. The safety seat according to claim 2, **characterized in that** the anti-tilt assembly (300) further includes a supporting transverse shaft (320) connected to the anti-tilt plate (310), the elastic member is a tension spring (330), one end of the tension spring (330) is connected to the supporting transverse shaft (320), and the other end of the tension spring (330) is connected to the bracket (200).

7. The safety seat according to claim 6, **characterized in that** the anti-tilt assembly (300) further includes first nuts (340), and the number of the anti-tilt plates (310) is two, both ends of the supporting transverse shaft (320) respectively pass through the two anti-tilt plates (310), and either end of the supporting transverse shaft (320) is relatively fixed to a corresponding anti-tilt plate (310) through a respective first nut (340).

8. The safety seat according to claim 2, **characterized in that** a slotted hole (313) is formed on the anti-tilt plate (310), and the safety seat further comprises a rod piece (400), which passes through the bracket (200) and extends into the slotted hole (313).

9. The safety seat according to claim 8, **characterized in that** the anti-tilt assembly (300) further includes a second nut (350), the rod piece (400) is a threaded rod, a second through hole (220) is opened on the bracket (200), the threaded rod sequentially passes through the slotted hole (313) and the second through hole (220), and the second nut (350) cooperates with an end of the threaded rod extending out of the second through hole (220).

10. The safety seat according to claim 2, **characterized in that** the anti-tilt plate (310) includes a connecting part (314) and an extending part (315) connected to each other, the plurality of positioning matching parts are arranged on the connecting part (314), the connecting part (314) is rotatably arranged on the bracket (200), and the elastic member is connected between the connecting part (314) and the bracket (200); the anti-tilt assembly (300) further comprises a shell (500) sleeved on the extending part (315).

11. The safety seat according to claim 10, **characterized in that** the shell (500) comprises a front cover (510) and a rear cover (520), the front cover (510) and the rear cover (520) are connected to form an inner cavity therebetween, and the extending part (315) is located within the inner cavity.

12. The safety seat according to any one of claims 1 to 11, **characterized in that** the base (100) comprises a base upper cover (110) and a base lower cover (120) connected to each other, and the bracket (200) is arranged on the base lower cover (120).
